# EUROPÄISCHE PATENTSCHRIFT

(11) **EP 0 663 532 B1**
(45) Veröffentlichungstag und Bekanntmachung des Hinweises auf die Patenterteilung: **06.05.1998**
(21) Anmeldenummer: 94117988.9
(22) Anmeldetag: 15.11.1994
(51) Int. Cl.: F15B 13/042, F16K 11/07, F16K 27/04

(54) **Mehrwegeventil**
Directional multiway valve
Distributeur à plusieurs voies

(30) Priorität: 13.01.1994 DE 4400760
(43) Veröffentlichungstag der Anmeldung: 19.07.1995
(73) Patentinhaber: FESTO AG & Co, 73734 Esslingen (DE)
(72) Erfinder: Stoll, Kurt, Dr., D-73732 Esslingen (DE)
(74) Vertreter: Abel, Martin, Dipl.-Ing.

(56) Entgegenhaltungen:
- DE-A- 1 976 030
- DE-A- 3 607 063
- DE-B- 1 290 397
- US-A- 4 924 902
- PATENT ABSTRACTS OF JAPAN vol. 7, no. 98 (M-210) (1243) 26. April 1983 & JP-A-58 021 070 (NISSAN) 7. Februar 1983

## Beschreibung

Die Erfindung betrifft ein Mehrwegeventil, mit einem Ventilgehäuse, in dem eine sich axial erstreckende Schieberaufnahme vorgesehen ist, in der sich eine Ventilschieberanordnung befindet, die durch Beaufschlagung mit einem Steuerdruck in der Schieberaufnahme längsverstellbar ist, um die Zufuhr eines Betätigungsfluids zu mindestens zwei seitlich in die Schieberaufnahme einmündenden Ventil-Arbeitskanälen zu beeinflussen, wobei die Ventilschieberanordnung zwei separate Ventilschieber aufweist, denen jeweils einer der beiden Ventil-Arbeitskanäle sowie mehrere sie umschließende und zur Steuerung der fluidischen Verbindung dienende Dichtringe zugeordnet sind, und die koaxial aufeinanderfolgend gemeinsam in der vom einen bis zum anderen Ende durchgehenden Schieberaufnahme angeordnet sind, wobei sie bei entsprechender Steuerdruckbeaufschlagung einer ihnen jeweils zugeordneten Betätigungsfläche längsverstellbar sind.

Ein Mehrwegeventil mit einer sich axial erstreckenden Schieberaufnahme, in der zwei separate Ventilschieber angeordnet sind, geht aus der US-A-4 924 902 hervor. Jedem Ventilschieber ist ein Magnetventil zugeordnet, das die Zufuhr eines Druckmediums steuern kann, um den zugeordneten Ventilschieber zwischen zwei Schaltstellungen umzuschalten. Allerdings ist eine voneinander unabhängige Betätigung der beiden Ventilschieber nicht möglich, da der jeweils in die einander angenäherte Schaltstellung umgeschaltete Ventilschieber am anderen Ventilschieber anliegt und dessen Betätigung behindert. Dadurch lassen sich nur ganz bestimmte Ansteuerungsaufgaben lösen. Bei abweichenden Ansteuerungsaufgaben ist ein Austausch wenigstens eines Ventilschiebers vorgesehen.

Es ist die Aufgabe der vorliegenden Erfindung ein Mehrwegeventil zu schaffen, das sich bei kompaktem Aufbau universeller einsetzen läßt.

Diese Aufgabe wird dadurch gelöst, daß jeder Ventilschieber an dem dem anderen Ventilschieber entgegengesetzten Endbereich eine von diesem anderen Ventilschieber abgewandte, mit einem Steuerdruck beaufschlagbare Betätigungsfläche aufweist, die an einem mit dem betreffenden Ventilschieber verbundenen, axial beweglich in einem Kolbenraum angeordneten Stellkolben vorgesehen ist, und daß die beiden Ventilschieber unabhängig voneinander zwischen zwei Schaltstellungen umschaltbar sind, die durch mit dem Stellkolben zusammenwirkende, an den axialen Begrenzungswänden eines jeweiligen Kolbenraumes vorgesehene gehäusefeste Anschläge definiert sind, wobei die beiden Ventilschieber in ihrer Länge so ausgebildet sind, daß sie gleichzeitig die aneinander angenäherte Schaltstellung einnehmen können.

Auf diese Weise sind die Funktionen von zwei getrennten Mehrwegeventilen in einem einzigen Mehrwegeventil zusammengefaßt. Jeder der beiden Ventilschieber läßt sich auf eine Art und Weise betätigen, die der Betätigung eines einfachen Mehrwegeventils vergleichbar ist. Die beiden Schaltstellungen werden durch Anschläge im jeweiligen Kolbenraum vorgegeben, die mit den Steuerkolben zusammenarbeiten. Da es möglich ist, beide Ventilschieber gleichzeitig in die einander angenäherte Schaltstellung zu verlagern, lassen sich die beiden Ventilfunktionen unabhängig voneinander ausüben, so daß sich das Mehrwegeventil für vielfältige Anwendungen einsetzen läßt, bei denen bisher verschiedene Ventiltypen zur Anwendung kommen mußten. So ist es durch eine entsprechende Steuerdruckbeaufschlagung der mit den beiden Ventilschiebern verbundenen Betätigungsflächen beispielsweise möglich, das Mehrwegeventil so zu betreiben, als ob zwei voneinander getrennte Mehrwegeventile vorlägen. Dies ermöglicht beispielsweise die Ansteuerung eines doppelt wirkenden Arbeitszylinders oder zweier getrennter einfach wirkender Arbeitszylinder. Denkbar ist es ferner, die beiden Ventil-Arbeitskanäle bei Bedarf zusammenzuschalten, um trotz schmaler Ventilbauweise eine Verdoppelung der Durchflußleistung zu erzielen und auch die Ansteuerung größerer Arbeitszylinder zu ermöglichen.

Aus der JP-A-62/13881 geht zwar bereits ein Mehrwegeventil hervor, das über zwei getrennt voneinander betätigbare Ventilglieder verfügt, die sich auch in der an einander angenäherten Schaltstellung nicht gegenseitig beeinflussen. Es handelt sich hierbei jedoch um ein sogenanntes Sitzventil, bei dem die Schaltstellungen dadurch definiert vorgegeben werden, daß am jeweiligen Ventilglied angeordnete Dichtungen axial gegen einen Ventilsitz gedrückt werden. Der Hubweg der zur Betätigung vorgesehenen Steuerkolben ist größer als die Länge der sie aufnehmenden Kolbenräume, so daß die Steuerkolben nicht zur Vorgabe der Schaltstellungen dienen.

Aus der DE-A-19 76 030 geht ein pneumatischer Verteiler hervor, der nur einen einzigen Ventilschieber aufweist. Zwar dienen die endseitig angeordneten Stellkolben wie auch im Falle der DE-B-12 90 397 zur Vorgabe bestimmter Schaltstellungen des Ventilschiebers. Jeder Stellkolben wirkt jedoch nur auf einer Axialseite mit einem Anschlag zusammen, so daß zur Vorgabe beider Schaltstellungen beide Stellkolben benötigt werden.

Aus der JP-A-58/021070 geht ein Magnetventil hervor, das über zwei zusammengesetzte Gehäusehälften verfügt, in die ein Ventilglied eingelegt ist.

Vorteilhafte Ausgestaltungen des erfindungsgemäßen Mehrwegeventils ergeben sich aus den Unteransprüchen.

In dem Bereich der Schieberaufnahme, in dem die einander zugewandten Enden der beiden Ventilschieber zu liegen kommen, ist zweckmäßigerweise mindestens ein Beaufschlagungsmittel vorgesehen, mit dem die beiden Ventilschieber in einander entgegengesetzte Axialrichtungen beaufschlagbar sind. Das Beaufschlagungsmittel kann ein insbesondere pneumatisches fluidisches Druckmittel sein, das beispielsweise von einem in dem Ventilgehäuse verlaufenden Ventil-Speisekanal stammt. Vorzugsweise ist das Beaufschlagungsmittel aber als Federanordnung ausgebildet, die sich zwischen den beiden Ventilschiebern abstützt und diese jeweils in eine erste Schaltstellung vorspannt. Das Umschalten aus dieser ersten Schaltstellung in eine zweite Schaltstellung, in der ein jeweiliger Ventilschieber in Richtung auf den anderen Ventilschieber verlagert ist, erfolgt dann zweckmäßigerweise durch Steuerdruckbeaufschlagung der jeweils zugeordneten Betätigungsfläche.

Bevorzugt ermöglichen die in dem gemeinsamen Ventilgehäuse angeordneten beiden Ventilschieber jeweils eine 3/2-Wege-Ventilfunktion, wobei jedem Ventilschieber ein eigener Ventil-Arbeitskanal und ein eigener Ventil-Entlüftungskanal zugeordnet ist, während zweckmäßigerweise beiden Ventilschiebern ein gemeinsamer Ventil-Speisekanal zugeordnet ist.

Vorzugsweise ist das Mehrwegeventil so ausgebildet, daß die beiden Ventilschieber auswechselbar sind, so daß sich an ihrer Stelle bei Bedarf ein konventioneller einteiliger Ventilschieber montieren läßt, um beispielsweise eine 5/2- oder eine 5/3-Wege-Ventilfunktion zu erhalten.

Besonders kompakte Querabmessungen sind vor allem dann möglich, wenn das Ventilgehäuse im Bereich der Schieberaufnahme längsgeteilt ist und mehrere Gehäuseteile aufweist, die in dem Teilungsbereich längsseits aneinandergesetzt sind. Zweckmäßigerweise ist die Längsteilung so getroffen, daß sich zwei Gehäuseteile ergeben, die jeweils eine Gehäusehälfte bilden. Eine derartige Ausgestaltung ermöglicht auch bei Bedarf einen raschen Austausch der Ventilschieber.

Nachfolgend wird die Erfindung anhand der beiliegenden Zeichnung näher erläutert. In dieser zeigen:
- Figur 1: eine erste Bauform des erfindungsgemäßen Mehrwegeventils im Längsschnitt gemäß Schnittlinie I-I aus Figur 4, wobei zwei vorhandene Steuerventile und eine das Mehrwegeventil tragende Fluidverteilereinrichtung nur strichpunktiert dargestellt sind, und wobei die beiden Ventilschieber oberhalb der Symmetrielinie in einer ersten Schaltstellung und unterhalb der Symmetrielinie in einer zweiten Schaltstellung gezeigt sind,

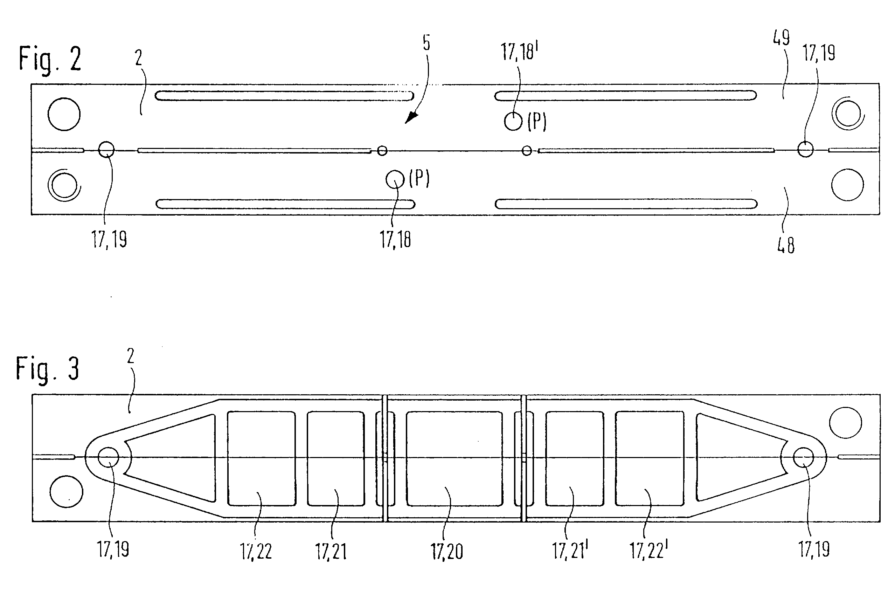

- Figur 2: eine Draufsicht auf das Mehrwegeventil mit Blickrichtung gemäß Pfeil II aus Figur 1,
- Figur 3: eine Untersicht auf das Mehrwegeventil aus Figur 1 mit Blick von unten gemäß Pfeil III aus Figur 1,
- Figur 4: einen Querschnitt durch das Mehrwegeventil aus Figur 1 gemäß Schnittlinie IV-IV aus Figur 1,
- Figur 5: ein vereinfachtes Schaltbild des Ventils aus Figur 1 bei Einnahme der ersten Schaltstellungen durch die Ventilschieber, wobei strichpunktiert eine bei Bedarf vorgenommene Zusammenschaltung der beiden Ventil-Arbeitskanäle angedeutet ist,
- Figur 6: ein der Darstellungsweise der Figur 5 entsprechendes Schaltbild des Mehrwegeventils gemäß Figur 1, wobei der rechtsliegende Ventilschieber die erste Schaltstellung und der linksliegende Ventilschieber die zweite Schaltstellung einnimmt,
- Figur 7: das in Figur 1 gezeigte Mehrwegeventil, nachdem die beiden Ventilschieber durch einen einheitlichen Ventilschieber ersetzt wurden, so daß sich eine 5/2-Wege-Ventilfunktion ergibt, und
- Figur 8: das Mehrwegeventil aus Figur 1, nachdem die beiden Ventilschieber durch einen einzigen einheitlichen Ventilschieber und eine MittelstellungsEinrichtung ersetzt wurden, so daß sich eine 5/3-Wege-Ventilfunktion ergibt.

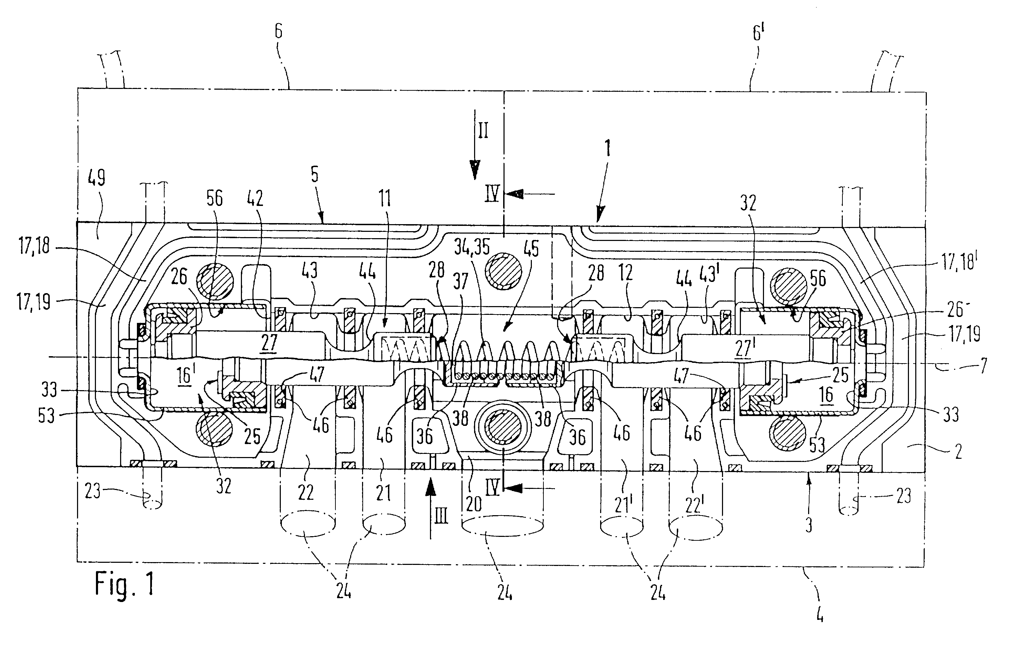

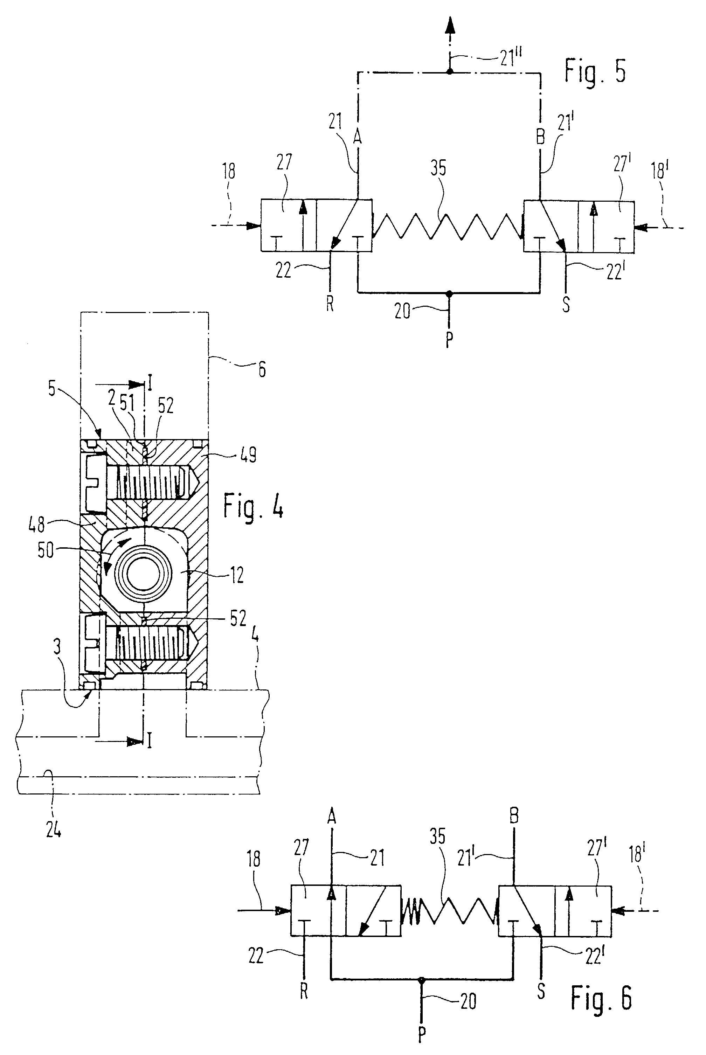

Das beispielsgemäße Mehrwegeventil 1 verfügt über ein längliches Ventilgehäuse 2 mit quaderförmiger Außengestalt. Im Querschnitt gemäß Figur 4 gesehen liegt eine rechteckige Konturierung vor, so daß die Gehäusehöhe zweckmäßigerweise größer ist als die Gehäusebreite. Eine der beiden schmäleren Außenflächen des Ventilgehäuses 2 dient beim Ausführungsbeispiel als Montagefläche 3, mit der voraus eine Montage auf zum Beispiel einer Fluidverteilereinrichtung 4 der strichpunktiert angedeuteten Art möglich ist. Die Montagefläche 3 entgegengesetzte, in Figuren 1 und 4 nach oben weisende Außenfläche bildet eine Bestückungsfläche 5 zur Bestückung mit mindestens einem und vorzugsweise - wie strichpunktiert angedeutet - mit zwei Steuerventilen 6, 6'. Bei letzteren handelt es sich zweckmäßigerweise um sogenannte Magnetventile, die elektrisch betätigt werden.

Im Innern des Ventilgehäuses 2 ist eine Schieberaufnahme 12 ausgebildet, die sich in Gehäuse-Längsrichtung 7 erstreckt. Sie nimmt eine noch näher zu erläuternde Ventilschieberanordnung 11 auf. An beiden axialen Endbereichen der Schieberaufnahme 12 befindet sich jeweils ein Steuerraum 16, 16', der mit einem unter einem Steuerdruck stehenden Steuerfluid beaufschlagbar ist, um die Ventilschieberanordnung 11 in Gehäuse-Längsrichtung 7 relativ zur Schieberaufnahme 12 zu verlagern.

Die Zufuhr des Steuerfluids zu den Steuerräumen 16, 16' erfolgt über zwei Ventil-Steuerkanäle 18, 18', die in der Wand des Ventilgehäuses 2 verlaufen und jeweils einerseits in einen der Steuerräume 16, 16' und andererseits zu der Bestückungsfläche 5 ausmünden. An der Bestückungsfläche kommunizieren sie mit den Steuerventilen 6, 6'. Zwei Steuerfluid-Versorgungskanäle 19 verlaufen ebenfalls durch das Ventilgehäuse 2 hindurch und kommunizieren einerseits, an der Bestückungsfläche 5, mit jeweils einem der Steuerventile 6, 6', während sie andererseits zur Montagefläche 3 ausmünden. Dort stehen sie mit in der Fluidverteilereinrichtung 4 verlaufenden Fluidverteiler-Steuerkanälen 23 in Verbindung, die das Steuerfluid liefern. Durch Betätigung der Steuerventile 6, 6' kann nun auf die Steuerdruckbeaufschlagung der Steuerräume 16, 16' Einfluß genommen werden, um die Ventilschieberanordnung 11 in die eine oder andere Richtung zu verstellen.

Die Ventil-Steuerkanäle 18, 18' und die Steuerfluid-Versorgungskanäle 19 gehören zu einer Anzahl von Ventilkanälen 17, die das Ventilgehäuse 2 durchziehen. Unter diesen Ventilkanälen 17 befinden sich desweiteren ein Ventil-Speisekanal 20, zwei Ventil-Arbeitskanäle 21, 21' und zwei Ventil-Entlüftungskanäle 22, 22'. Diese fünf letztgenannten Ventilkanäle 17 verlaufen quer zur Gehäuse-Längsrichtung 7, wobei sie in Gehäuse-Längsrichtung 7 aufeinanderfolgend angeordnet sind und jeweils einerseits umfangsseitig in die Schieberaufnahme 12 und andererseits zur Montagefläche 3 ausmünden. Über die Montagefläche 3 kommunizieren sie mit strichpunktiert angedeuteten Fluidverteiler-Kanälen 24, die in der zum Beispiel plattenförmigen Fluidverteilereinrichtung 4 verlaufen. Auf diese Weise ist über die Fluidverteilereinrichtung 4 eine zentrale Ver- und Entsorgung mehrerer Mehrwegeventile 1 möglich, die Seite an Seite auf der Fluidverteilereinrichtung 4 montiert sind.

Im Ventilgehäuse 2 ist der Ventil-Speisekanal 20 in Gehäuse-Längsrichtung 7 beidseits von jeweils einem der Ventil-Arbeitskanäle 21, 21' flankiert, auf die dann jeweils noch einer der beiden Ventil-Entlüftungskanäle 22, 22' folgt.

Die Ventilschieberanordnung 11 verfügt über zwei voneinander getrennt ausgebildete einzelne Ventilschieber 27, 27'. Sie sind gemeinsam in der vom einen bis zum anderen Ende durchgehend ausgebildeten Schieberaufnahme 12 angeordnet, wobei sie unter koaxialer Ausrichtung axial aufeinanderfolgend. Die Längsachsen beider Ventilschieber 27, 27' fallen also mit der Längsachse der Schieberaufnahme 12 zusammen.

Die beiden Ventilschieber 27, 27' sind bewegungsentkoppelt und lassen sich bei entsprechender Steuerdruckbeaufschlagung der zugeordneten Steuerräume 16, 16' unabhängig voneinander axial verlagern.

Jeder Ventilschieber 27, 27' kann beim Ausführungsbeispiel zwei Schaltstellungen einnehmen, zwischen denen er durch axiales Verlagern umschaltbar ist. In der in Figur 1 oberhalb der Mittellinie dargestellten ersten Schaltstellung befindet sich der betreffende Ventilschieber 27, 27' zu dem ihm zugeordneten stirnseitigen Endbereich der Schieberaufnahme 12 hin verlagert. Dabei ergibt sich zwischen den beiden einander zugewandten Stirnflächen 28 der Ventilschieber 27, 27' ein größerer Axialabstand. In der in Figur 1 unterhalb der Mittellinie gezeigten zweiten Schaltstellung ist ein jeweiliger Ventilschieber 27, 27' axial an den anderen Ventilschieber 27, 27' angenähert, so daß besagter Axialabstand geringer ist.

An beiden stirnseitigen Endbereichen der Schieberaufnahme 12 ist ein Kolbenraum 32 vorgesehen, der einen axial verschieblichen Stellkolben 26 aufnimmt. Der Stellkolben 26 unterteilt den Kolbenraum 32 in zwei Raumabschnitte, wobei der vom zugeordneten Ventilschieber 27, 27' abgewandte Raumabschnitt den jeweiligen Steuerraum 16, 16' bildet. Der Stellkolben 26 greift am zugeordneten Ventilschieber 27, 27' an, der je nach Schaltstellung mehr oder weniger weit in den Kolbenraum 32 hineinragt und insbesondere mit seinem Endbereich an dem Stellkolben 26 befestigt ist.

In der Ausgangsstellung des Mehrwegeventils 1 sind die beiden Ventilschieber 27, 27' in die erste Schaltstellung vorgespannt. Dies geschieht mittels eines Beaufschlagungsmittels 34, das beim Ausführungsbeispiel von einer Federanordnung 35 gebildet ist und sich in der Schieberaufnahme 12 im Bereich der einander zugewandten Enden 36 der beiden Ventilschieber 27, 27' befindet. Von Vorteil ist, daß sich die Federanordnung 35 nicht am Ventilgehäuse 2 sondern nur zwischen den beiden Ventilschiebern 27, 27' abstützt, wobei sie zweckmäßigerweise in dem axialen Zwischenraum 37 zwischen den beiden Ventilschiebern 27, 27' angeordnet ist. Letztere verfügen beim Ausführungsbeispiel an ihren einander zugewandten Stirnseiten zudem über eine axiale Vertiefung oder Ausnehmung 38, in der die Federanordnung 35 endseitig jeweils aufgenommen ist, so daß sie in ihrer Lage fixiert ist. Bei der beispielsgemäßen Federanordnung 35 handelt es sich um eine Druckfederanordnung, die aus einer oder mehreren Schraubendruckfedern besteht.

Als Beaufschlagungsmittel wäre auch ein fluidisches Druckmittel, insbesondere Druckluft, denkbar.

Zur Definition der ersten Schaltstellung wird ein jeweiliger Ventilschieber 27, 27' durch das Beaufschlagungsmittel 34 gegen einen gehäusefesten Anschlag gedrückt. Dieser ist beim Ausführungsbeispiel von der axial außen liegenden Begrenzungswand 33 eines jeweiligen Kolbenraumes 32 gebildet, auf die der mit dem Ventilschieber 27, 27' verbundene Stellkolben 26 mit seiner dem Steuerraum 16, 16' zugewandten Betätigungsfläche 25 aufläuft.

Zum Umschalten eines jeweiligen Ventilschiebers 27, 27' wird dem zugeordneten Steuerraum 16, 16' Steuerfluid zugeführt, das die zugewandte Betätigungsfläche 25 beaufschlagt. Die zweite Schaltstellung ist wiederum durch einen gehäusefesten Anschlag vorgegeben, der beim Ausführungsbeispiel über den Stellkolben 26 mit dem zugeordneten Ventilschieber 27, 27' zusammenarbeitet und zweckmäßigerweise von der der äusseren axialen Begrenzungswand 33 entgegengesetzten inneren axialen Begrenzungswand 42 eines jeweiligen Kolbenraumes 32 gebildet ist, die vom Endbereich des Ventilschiebers 27, 27' axial verschieblich durchsetzt ist.

Beide Ventilschieber 27, 27' können ihre jeweiligen Schaltstellungen ohne gegenseitige Behinderung einnehmen, was eine voneinander unabhängige Betätigung gestattet. Jedem Ventilschieber 27, 27' sind hierzu zweckmäßigerweise zwei eigene Anschläge 33, 42 zugeordnet, an denen er anliegen kann, ohne den jeweils anderen Ventilschieber 27, 27' zu berühren, unabhängig davon, welche Stellung dieser gerade einnimmt.

Die beiden Ventilschieber 27, 27' können unabhängig voneinander jeweils eine Mehrwege-Ventilfunktion ausüben, so daß praktisch zwei Mehrwegeventil-Einheiten in einem gemeinsamen Ventilgehäuse 2 zusammengefaßt sind und das eigentliche Mehrwegeventil 1 bilden. Die Ventilfunktion eines jeweiligen Ventilschiebers 27, 27' ist beim Ausführungsbeispiel eines 3/2-Wege-Ventilfunktion. Jeder Ventilschieber 27, 27' erstreckt sich in einem Längenabschnitt 43, 43' der Schieberaufnahme 12, in den jeweils einer der Ventil-Arbeitskanäle 21, 21' und der Ventil-Entlüftungskanäle 22, 22' einmündet. Der Ventil-Speisekanal 20 ist beiden Ventilschiebern 27, 27' zugeordnet und mündet längsmittig in dem Bereich in die Schieberaufnahme 12 ein, in dem die beiden Längenabschnitte 43, 43' ineinander übergehen. In der zweiten Schaltstellung ragt ein jeweiliger Ventilschieber 27, 27' bis in den Bereich des erwähnten Ventil-Speisekanals 20.

Durch geeignete Formgebung des jeweiligen Ventilschiebers 27, 27', die als solches bekannt ist, erfolgt je nach Schaltstellung eine gewisse Zuordnung zwischen den seitlich in die Schieberaufnahme 12 einmündenden Ventilkanälen 17.

In der die Ausgangsstellung des Mehrwegeventils 1 bildenden ersten Schaltstellung eines jeweiligen Ventilschiebers 27, 27' ist die Zufuhr von Betätigungsfluid aus dem Ventil-Speisekanal 20 zu den benachbarten Ventil-Arbeitskanälen 21, 21' unterbrochen. Hingegen sind diese Ventil-Arbeitskanäle 21, 21' über die benachbarten Ventil-Entlüftungskanäle 22, 22' entlüftet. In der zweiten Schaltstellung ermöglicht ein jeweiliger Ventilschieber 27, 27' über die Schieberaufnahme 12 eine Kommunikation des Ventil-Speisekanals 20 mit dem benachbarten Ventil-Arbeitskanal 21, 21', so daß Betätigungsfluid überströmen und dem jeweiligen Ventil-Arbeitskanal 21, 21' zugeführt werden kann. Gleichzeitig sind die Ventil-Entlüftungskanäle 22, 22' abgesperrt.

An die Ventil-Arbeitskanäle 21, 21' sind beliebige Verbraucher anschließbar. Häufig wird es sich dabei um fluidisch betätigbare Arbeitszylinder einfach- oder doppeltwirkender Art handeln. Da die beiden Ventilschieber 27, 27' über die ihnen zugeordneten Steuerventile 6, 6' unabhängig voneinander schaltbar sind, ist es problemlos möglich, zwei getrennte Verbraucher unabhängig voneinander anzusteuern, das heißt mit Betätigungsfluid zu versorgen oder zu belüften.

Deutlich wird dies auch aus den Schaltbildern der Figuren 5 und 6. In Figur 5 befinden sich beide Ventilschieber 27, 27' in der ersten Schaltstellung, in der die beiden Ventil-Arbeitskanäle 21, 21' belüftet sind. Wird nun beispielsweise ein Steuerventil 6 betätigt, so schaltet der zugeordnete Ventilschieber 27 in die zweite Schaltstellung um, so daß der angeschlossene Verbraucher über den Ventil-Arbeitskanal 21 mit Betätigungsfluid versorgt wird (Figur 6). Die Betätigung des anderen Ventilschiebers 27' erfolgt bei Bedarf.

Es ist auf diese Weise beispielsweise möglich, zwei voneinander unabhängige einfachwirkende Arbeitszylinder anzusteuern.

Die Ansteuerung der beiden Ventilschieber 27, 27' kann beliebig zeitlich phasenverschoben erfolgen, und zwar entweder vollkommen willkürlich oder in bestimmten vorgegebenen zeitlichen Intervallen.

Es besteht ferner die Möglichkeit, durch zeitlich phasenverschobene Betätigung der beiden Ventilschieber 27, 27' einen an beide Ventil-Arbeitskanäle 21, 21' angeschlossenen doppelt wirkenden Arbeitszylinder anzusteuern, wobei über den einen Ventilschieber 27 der Vorhub und über den anderen Ventilschieber 27' der Rückhub veranlaßt wird. Auch ist eine Ansteuerung möglich, bei der die eine Arbeitskammer des Zylinders zeitlich vorentlüftet und darauffolgend die andere Arbeitskammer entlüftet wird. Dies ermöglicht eine bis zu 50 Prozent höher Kolbengeschwindigkeit als bei der Ansteuerung mit einem konventionellen 4-Wege-Ventil.

In Figur 5 ist angedeutet, daß die beiden Ventil-Arbeitskanäle 21, 21' auch zu einem gemeinsamen Arbeitskanal 21'' zusammengeschaltet sein können. Sieht an nun eine simultane Ansteuerung der beiden Ventilschieber 27, 27' vor, derart, daß sie jeweils gleichzeitig die zweite Schaltstellung einnehmen, so wird gleichzeitig über beide Ventil-Arbeitskanäle 21, 21' Betätigungsfluid zugeführt, was eine Verdoppelung der Durchflußlei- stung zur Folge hat. Dies ermöglicht bei äußerst schmal bauendem Mehrwegeventil die Ansteuerung großer Arbeitszylinder.

Bei simultaner Ansteuerung für einen doppeltwirkenden Arbeitszylinder besteht die Möglichkeit, den Kolben des Arbeitszylinders bei gleichzeitiger zweiter Schaltstellung der beiden Ventilschieber 27, 27' in der momentanen Position zu arretieren und bei gleichzeitiger erster Schaltstellung durch damit verbundene gleichzeitige Entlüftung eine Schwimmstellung für den Kolben zu ermöglichen. Dabei ist jeweils einer der beiden Ventil-Arbeitskanäle 21, 21' mit jeweils einem der Arbeitsräume des Arbeitszylinders verbunden.

Die Länge der beiden Ventilschieber 27, 27' ist zweckmäßigerweise so gewählt, daß sich die Ventilschieber 27, 27' bei gleichzeitiger Einnahme der zweiten Schaltstellung mit Ihren Stirnflächen 28 nicht gegenseitig beaufschlagen, so daß sich die Schaltstellungen nicht gegenseitig beeinflussen.

Die beiden Ventilschieber 27, 27' sind wie beim Ausführungsbeispiel vorzugsweise als Kolbenschieber ausgebildet und verfügen außen über eine zylindrische und vorzugsweise kreiszylindrische Formgebung, wobei mindestens eine rundumlaufende nutartige Vertiefung oder Einschnürung 44 vorgesehen ist. Diese Einschnürung 44 befindet sich in der ersten Schaltstellung in dem Bereich zwischen einem Ventil-Arbeitskanal 21, 21' und einem Ventil-Entlüftungskanal 22, 22' während sie sich in der zweiten Schaltstellung in dem Bereich zwischen dem Ventil-Speisekanal 20 und einem Ventil-Arbeitskanal 21, 21' befindet. Sie ermöglicht daher in der jeweiligen Stellung eine Überströmung zwischen den beiden zugeordneten Ventilkanälen 17.

Das Beaufschlagungsmittel 34 befindet sich im Übergangsbereich zwischen den beiden Längenabschnitten 43, 43' der Schieberaufnahme 12, in den auch der Ventil-Speisekanal 20 einmündet. Es ist daher vorzugsweise möglich, daß das in diesem Übergangsbereich ständig anstehende Betätigungsfluid auf die Stirnseiten der Ventilschieber 27, 27' einwirkt und diese in Richtung der ersten Schaltstellung beaufschlagt.

Die beiden Ventilschieber 27, 27' sind beim Ausführungsbeispiel dichtungslos ausgebildet. Es handelt sich beispielsweise um Aluminiumteile. Um das Überströmen zwischen axial benachbarten Bereichen der Schieberaufnahme 12 zu verhindern, sind mehrere einzelne Dichtringe 46 vorgesehen, die in der Schieberaufnahme 12 axial aufeinanderfolgen mit koaxialer Anordnung so festgelegt sind, daß sie den jeweils zugeordneten Ventilschieber 27, 27' umschließen. Je nach Schaltstellung der Ventilschieber 27, 27' kommt ein Dichtring 46 im Bereich einer Einschnürung 44 zu liegen, während zugleich ein oder mehrere andere Dichtringe 46 in Dichtkontakt mit den axial neben den Einschnürungen 44 liegenden Ventilschieberabschnitten stehen. Auf diese Weise wird die fluidische Verbindung zwischen den seitlich einmündenden Ventilkanälen 17 gesteuert.

Um die beim Ausführungsbeispiel vorgesehenen beiden 3/2-Wege-Ventilfunktionen zu gewährleisten, sind jedem Ventilschieber 27, 27' drei mit axialem Abstand aufeinanderfolgend angeordnete Dichtringe 46 zugeordnet, die jeweils in einer ringförmigen Haltevertiefung 47 festgelegt sind, die vorzugsweise unmittelbarer Bestandteil des Ventilgehäuses 2 ist und in das Ventilgehäuse 2 insbesondere unmittelbar eingeformt ist. Auf diese Weise haben die Dichtringe 46 jeweils eine Doppelfunktion, indem sie zum einen bezüglich des Ventilgehäuses 2 eine statische Abdichtung bewirken und zum anderen bezüglich der Ventilschieber 27, 27' eine dynamische Dichtfunktion ausüben. Eine zusätzliche, zwischen das Ventilgehäuse 2 und den Kolbenschieber 3 zwischengefügte Hülsenanordnung, wie sie beispielsweise aus der EP 0 122 247 Bl hervorgeht, erübrigt sich somit, was den Aufbau und die Montage beträchtlich vereinfacht.

Die Montage der vorzugsweise unzusammenhängend ausgebildeten und Einzelringe darstellenden Dichtringe 46 wie auch diejenige der beiden Ventilschieber 27, 27' und der Stellkolben 26 gestaltet sich bei dem vorliegenden Mehrwegeventil 1 besonders einfach, weil das Ventilgehäuse 2 vorzugsweise längsgeteilt ist. Es setzt sich aus mehreren, insbesondere zwei Gehäuseteilen 48, 49 zusammen, die jeweils einen sich ein Stück weit in Umfangsrichtung (Doppelpfeil 50) erstreckenden Wandabschnitt der Wand der Schieberaufnahme 12 einschließlich der zugeordneten Umfangsabschnitte der Haltevertiefungen 47 bilden und sich ansonsten ohne Querteilung zumindest über die Länge der Schieberaufnahme 12 und vorzugsweise über die gesamte Ventilgehäuselänge erstrecken.

Der zwischen den Gehäuseteilen 48, 49 vorliegende Teilungsbereich 51 verläuft zweckmäßigerweise in einer sich in Gehäuse-Längsrichtung 7 und zugleich radial erstreckenden Ebene. Im Teilungsbereich 51 sind die Gehäuseteile 48, 49 mit aufeinander abgestimmten Fügeflächen aneinandergesetzt.

Vor dem Zusammenbau des Mehrwegeventils 1 liegen die beiden Gehäuseteile 48, 49, zunächst getrennt vor. Dadurch ist die Schieberaufnahme 12 umfangsseitig offen, so daß die Dichtringe 46 und die beiden Ventilschieber 27, 27' problemlos eingesetzt werden können. Anschließend werden die beiden Gehäuseteile 48, 49 zusammengesetzt und wie beim Ausführungsbeispiel miteinander verschraubt oder aber miteinander verklebt oder verschweißt.

Um im Teilungsbereich 51 eine Abdichtung zu erzielen, ist beim Ausführungsbeispiel eine Dichtung 52 zwischengefügt. Auf sie kann bei zum Beispiel durch Läppen exakt bearbeiteten Fügeflächen unter Umständen auch verzichtet werden.

Um zu verhindern, daß die Stellkolben 26 auf von dem Teilungsbereich 51 hervorgerufenen Fugen laufen, sind die Kolbenräume 32 beim Ausführungsbeispiel im Innern von zum Beispiel topfähnlichen Führungshülsen 53 ausgebildet, die in sich beidseits an die Schieberaufnahme 12 anschließenden Gehäuseausnehmungen 56 eingesetzt sind, welche infolge der Längsteilung jeweils hälftig in einem der beiden Gehäuseteile 48, 49 vorgesehen sind.

Ein weiterer Vorteil des beispielsgemäßen längsgeteilten Ventilgehäuses 2 besteht darin, daß die vorhandenen Ventilkanäle 17 so gelegt sind, daß sie im Teilungsbereich 51 zwischen den beiden Gehäuseteilen 48, 49 verlaufen. Allerdings kann die Anzahl der im Teilungsbereich 51 verlaufenden Ventilkanäle 17 je nach Ventiltyp auch geringer sein als die Gesamtanzahl der Ventilkanäle. Vorteilhaft ist es jedenfalls, wenn zumindest ein Längenabschnitt der Gesamtlänge mindestens eines Ventilkanals 17 in den Teilungsbereich 51 gelegt ist, wobei es von Vorteil ist, wenn sich zumindest die Ventil-Steuerkanäle 18, 18' und/oder die Steuerfluid-Versorgungskanäle 19 wenigstens teilweise entlang des Teilungsbereiches 51 erstrecken. Vorteilhaft ist diese Ausführungsform vor allem deshalb, weil sie die Herstellung des betreffenden Ventilkanal-Längenabschnittes ausgehend von einer der Fügeflächen ermöglicht, die vor dem Zusammenfügen optimal zugänglich sind. Auch komplizierte Kanalverläufe lassen sich auf diese Weise problemlos verwirklichen.

Die Dichtringe 46 bestehen zweckmäßigerweise jeweils aus einem Dichtkörper aus elastischem Material, in den ein Stützring ganz oder teilweise eingebettet ist, um eine gewisse Formstabilität zu erzielen.

Es ist von Vorteil, wenn das Ventilgehäuse 2 ausschließlich aus längsseits aneinandergesetzten Gehäuseteilen 48, 49 besteht, die wie beim Ausführungsbeispiel zugleich auch die stirnseitigen Gehäusewände bilden, so daß sich separate Gehäusedeckel erübrigen.

Ein weiterer Vorteil des beispielsgemäßen Mehrwegeventils 1 besteht darin, daß die beiden Ventilschieber 27, 27' problemlos durch einen zusammenhängenden einheitlichen Ventilschieber 57 ersetzt werden können, um Mehrwegeventile anderen Typs zu erhalten. Änderungen an der Bestückung mit Dichtringen 46 und an der Anordnung der Ventilkanäle 17 sind dabei nicht möglich.

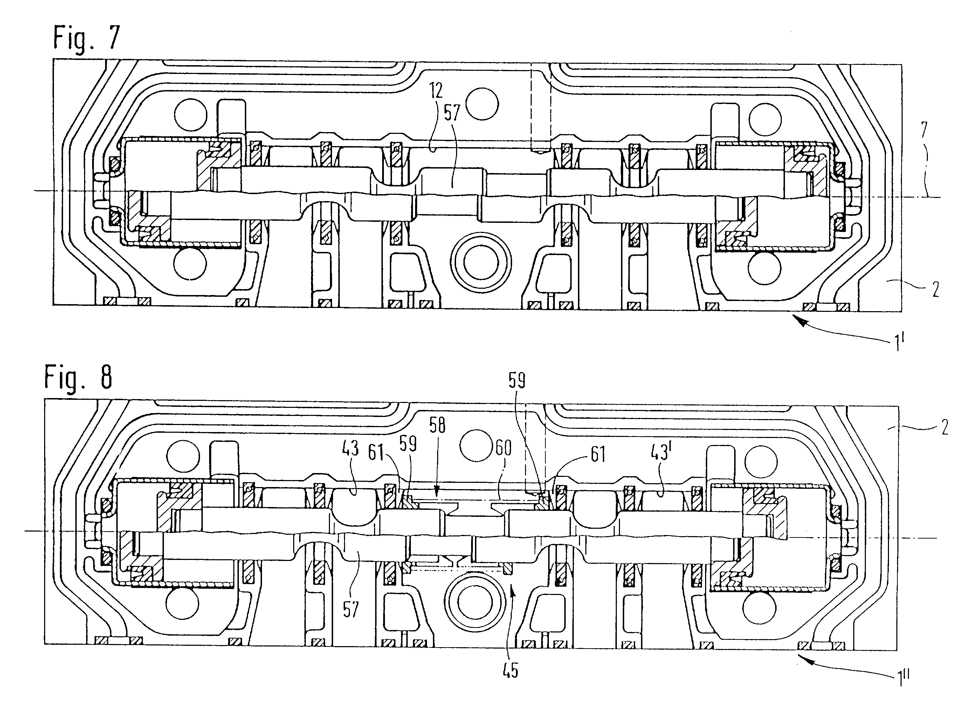

Die Figur 7 zeigt ein derart modifiziertes Mehrwegeventil 1', das nun einen durchgehend zusammenhängenden Ventilschieber 57 aufweist, so daß anstelle der ursprünglichen beiden 3/2-Wege-Ventilfunktionen eine 5/2-Wege-Ventilfunktion tritt. Man kann sich den Ventilschieber 57 entstanden denken durch eine feste Verbindung der beiden Ventilschieber 27, 27', während alle übrigen Bestandteile beibehalten werden.

Im Falle des modifizierten Mehrwegeventils 1'' der Figur 8 kommt der gleiche Ventilschieber 57 wie beim Mehrwegeventil 1' der Figur 7 zum Einsatz. Allerdings ist hier im Übergangsbereich 45 zwischen den beiden Längenabschnitten 43, 43' der Schieberaufnahme 12 eine Mittelstellungseinrichtung 58 vorgesehen, aufgrund derer sich eine 5/3-Wege-Ventilfunktion ergibt. Der Aufbau einer solchen Mittelstellungseinrichtung 58 ist grundsätzlich bekannt und geht beispielsweise aus der DE 40 11 908 C2 hervor, so daß sich Details erübrigen. Sie umfaßt zwei mit axialem Abstand längsverschieblich am Ventilschieber 57 angeordnete Vorsprünge 59, die von einer Druckfedereinrichtung 60 in Gegenrichtung beaufschlagt werden, so daß sie an nicht näher dargestellten ventilschieberfesten Anschlägen anliegen. In der Mittelstellung des Ventilschiebers 57 liegen diese beiden Vorsprünge 59 dabei zugleich an gehäusefesten Anschlägen 61 an. Wird der Ventilschieber 57 nun in die eine oder andere Richtung ausgelenkt, ergibt sich aufgrund der Komprimierung der Druckfedereinrichtung 60 eine Rückstellkraft, die ständig bestrebt ist, den Ventilschieber 57 in die Mittelstellung zu zwingen.

Das erfindungsgemäße Mehrwegeventil ermöglicht eine hohe Anzahl verschiedener Funktionen und eine Einsatzmöglichkeit sowohl für einfachwirkende als auch für doppeltwirkende Arbeitszylinder bei äußerst kompakter Bauweise. Die Herstellung ist kostengünstig möglich, da der längsgeteilte Gehäuseaufbau eine spanlose Fertigung der Gehäusehälften ermöglicht. Je nach Art der Ansteuerung der beiden Ventilschieber lassen sich die Funktionen verschiedenster Ventiltypen verwirklichen, beispielsweise zwei 3/2-Wegeventile, ein 5/2-Wegeventil oder ein 5/4-Wegeventil. Weitere Kombinationsmöglichkeiten ergeben sich, wenn die beiden Ventilschieber jeweils eine 2/2-Wege-Ventilfunktion ermöglichen.

## Patentansprüche

1. Mehrwegeventil, mit einem Ventilgehäuse, in dem eine sich axial erstreckende Schieberaufnahme (12) vorgesehen ist, in der sich eine Ventilschieberanordnung (11) befindet, die durch Beaufschlagung mit einem Steuerdruck in der Schieberaufnahme (12) längsverstellbar ist, um die Zufuhr eines Betätigungsfluids zu mindestens zwei seitlich in die Schieberaufnahme (12) einmündenden Ventil-Arbeitskanälen (21, 21') zu beeinflussen, wobei die Ventilschieberanordnung (11) zwei separate Ventilschieber (27, 27') aufweist, denen jeweils einer der beiden Ventil-Arbeitskanäle (21, 21') sowie mehrere sie umschließende und zur Steuerung der fluidischen Verbindung dienende Dichtringe (46) zugeordnet sind, und die koaxial aufeinanderfolgend gemeinsam in der vom einen bis zum anderen Ende durchgehenden Schieberaufnahme (12) angeordnet sind, wobei sie bei entsprechender Steuerdruckbeaufschlagung einer ihnen jeweils zugeordneten Betätigungsfläche (25) längsverstellbar sind, dadurch gekennzeichnet, daß jeder Ventilschieber (27, 27') an dem dem anderen Ventilschieber (27', 27) entgegengesetzten Endbereich eine von diesem anderen Ventilschieber (27', 27) abgewandte, mit einem Steuerdruck beaufschlagbare Betätigungsfläche (25) aufweist, die an einem mit dem betreffenden Ventilschieber (27, 27') verbundenen, axial beweglich in einem Kolbenraum (32) angeordneten Stellkolben (26) vorgesehen ist, und daß die beiden Ventilschieber (27, 27') unabhängig voneinander zwischen zwei Schaltstellungen umschaltbar sind, die durch mit dem Stellkolben (26) zusammenwirkende, an den axialen Begrenzungswänden eines jeweiligen Kolbenraumes (32) vorgesehene gehäusefeste Anschläge (33, 42) definiert sind, wobei die beiden Ventilschieber (27, 27') in ihrer Länge so ausgebildet sind, daß sie gleichzeitig die aneinander angenäherte Schaltstellung einnehmen können.

2. Mehrwegeventil nach Anspruch 1, dadurch gekennzeichnet, daß in der Schieberaufnahme (12) im Bereich der einander zugewandten Enden (36) der beiden Ventilschieber (27, 27') mindestens ein Beaufschlagungsmittel (34) vorgesehen ist, das die beiden Ventilschieber (27, 27') in einander entgegengesetzte Axialrichtungen beaufschlagt.

3. Mehrwegeventil nach Anspruch 2, dadurch gekennzeichnet, daß das mindestens eine Beaufschlagungsmittel (34) als Federanordnung (35) ausgebildet ist.

4. Mehrwegeventil nach Anspruch 2 oder 3, dadurch gekennzeichnet, daß sich das mindestens eine Beaufschlagungsmittel (34) zwischen den beiden Ventilschiebern (27, 27') befindet und stets gleichzeitig beide Ventilschieber (27, 27') beaufschlagt.

5. Mehrwegeventil nach einem der Ansprüche 2 bis 4, dadurch gekennzeichnet, daß die beiden Ventilschieber (27, 27') an ihren einander zugewandten Stirnseiten (28) eine Ausnehmung (38) aufweisen, in der das mindestens eine Beaufschlagungsmittel (34) zumindest teilweise versenkt aufgenommen ist.

6. Mehrwegeventil nach einem der Ansprüche 1 bis 5, dadurch gekennzeichnet, daß jeder Ventilschieber (27, 27') zusammen mit ihm zugeordneten, seitlich in die Schieberaufnahme (12) einmündenden Ventilkanälen (17) eine Dreiwege-Ventil- funktion ausübt, zweckmäßigerweise eine 3/2-Wege-Ventilfunktion.

7. Mehrwegeventil nach einem der Ansprüche 1 bis 6, dadurch gekennzeichnet, daß eine simultane Ansteuerung beider Ventilschieber (27, 27') vorgesehen ist, derart, daß eine abwechselnde gleichzeitige Freigabe oder Unterbrechung der Zufuhr des Betätigungsfluids zu den beiden Ventil-Arbeitskanälen (21, 21') möglich ist.

8. Mehrwegeventil nach Anspruch 7, dadurch gekennzeichnet, daß die beiden Ventil-Arbeitskanäle (21, 21') zu einem gemeinsamen Arbeitskanal (21'') zusammengeschaltet sind.

9. Mehrwegeventil nach einem der Ansprüche 1 bis 8, dadurch gekennzeichnet, daß eine zeitlich versetzte Ansteuerung der beiden Ventilschieber (27, 27') vorgesehen ist, derart, daß eine abwechselnde Freigabe und Unterbrechung der Zufuhr von Betätigungsfluid zu den beiden Ventil-Arbeitskanälen (21, 21') möglich ist.

10. Mehrwegeventil nach einem der Ansprüche 1 bis 9, dadurch gekennzeichnet, daß die beiden separaten Ventilschieber (27, 27)' durch einen einzigen zusammenhängenden Ventilschieber (57) ersetzbar sind, um anstelle zweier 3/2-Wege-Ventilfunktionen eine einzige 5/2-Wege-Ventilfunktion oder eine 5/3-Wege-Ventilfunktion zu erhalten.

11. Mehrwegeventil nach einem der Ansprüche 1 bis 10, dadurch gekennzeichnet, daß ein jeweiliger Ventilschieber (27, 27') als Kolbenschieber ausgebildet ist.

12. Mehrwegeventil nach einem der Ansprüche 1 bis 11, dadurch gekennzeichnet, daß das Ventilgehäuse (2) im Bereich der Schieberaufnahme (12) längsgeteilt ist und mehrere in dem Teilungsbereich (37) längsseits aneinandergesetzte Gehäuseteile (48, 49) aufweist.

13. Mehrwegeventil nach Anspruch 12, dadurch gekennzeichnet, daß in dem Ventilgehäuse (12) mindestens ein Ventilkanal (17) verläuft, wobei sich mindestens ein Längenabschnitt eines Ventilkanals (17) in dem Teilungsbereich (37) erstreckt, wobei die Kanalwand dieses Längenabschnittes aus sich ergänzenden Wandumfangsabschnitten zusammengesetzt ist, die an den im Teilungsbereich (37) längsseits aneinander angrenzenden Gehäuseteilen (48, 49) vorgesehen sind.

14. Mehrwegeventil nach Anspruch 13, dadurch gekennzeichnet, daß ein in dem Teilungsbereich (37) verlaufender Längenabschnitt eines Ventilkanals (17) zu einem Ventil-Steuerkanal (18, 18)' gehört, der das zur Beaufschlagung einer Betätigungsfläche (25) dienende Steuerfluid führt.

## Claims

1. Multiway valve, with a valve housing, in which is provided an axially-extending slide mount (12) containing a valve slide assembly (11) which is longitudinally adjustable in the slide mount (12) when subjected to a control pressure, in order to influence the supply of an actuating fluid to at least two valve operating passages (21, 21') entering the slide mount (12) from the side, wherein the valve slide assembly (11) has two separate valve slides (27, 27'), to each of which is assigned one of the two valve operating passages (21, 21') together with several seal rings (41) surrounding them and serving to control the fluidic connection, and which are arranged together, coaxially consecutive, in the slide mount (12) which is continuous from one end to the other, wherein they are longitudinally adjustable under suitable control pressure application on a respectively-assigned actuating surface (25), characterized in that each valve slide (27, 27') has on the end section opposite the other valve slide (27, 27') an actuating surface (25) facing away from this other valve slide (27, 27'), capable of being subjected to a control pressure, and provided on an actuating piston (26) connected to the valve slide (27, 27') concerned and axially movable in a piston space (32), and that the two valve slides (27, 27') are switchable independently of one another between two switching positions, which are defined by stops (33, 42) fixed to the housing and provided on the axial boundary walls of the respective piston space (32), wherein the two valve slides (27, 27') are of such a length that they can simultaneously adopt the closely-corresponding switching positions.

2. Multiway valve according to claim 1, characterized in that there is provided in the slide mount (12), in the area of the facing ends (36) of the two valve slides (27, 27'), one or more means of pressure-loading (34), forcing the two valve slides (27, 27') in opposite axial directions.

3. Multiway valve according to claim 2, characterized in that one or more of the means of pressure-loading (34) is in the form of a spring assembly (35).

4. Multiway valve according to claim 2 or 3, characterized in that one or more of the means of pressure-loading (34) is located between the two valve slides (27, 27') and always acts simultaneously on both valve slides (27, 27').

5. Multiway valve according to any of claims 2 to 4, characterized in that the two valve slides (27, 27') have on their opposite end faces (28) a recess (38) in which the means of pressure-loading (34) is or are accommodated, at least partially recessed.

6. Multiway valve according to any of claims 1 to 5, characterized in that each valve slide (27, 27'), together with valve passages (17) assigned to it and entering the slide mount (12) from the side, exercises a three-way valve function, expediently a 3/2-way valve function.

7. Multiway valve according to any of claims 1 to 6, characterized in that simultaneous activation of both valve slides (27, 27') is provided, such that alternate simultaneous release or interruption of the supply of actuating fluid to the two valve operating passages (21, 21') is possible.

8. Multiway valve according to claim 7, characterized in that the two valve operating passages (21, 21') are interconnected to form a common operating passage (21'').

9. Multiway valve according to any of claims 1 to 8, characterized in that a phased activation of the two valve slides (27, 27') is provided, such that alternate release or interruption of the supply of actuating fluid to the two valve operating passages (21, 21') is possible.

10. Multiway valve according to any of claims 1 to 9, characterized in that the two separate valve slides (27, 27') may be replaced by a single continuous valve slide (57), in order to obtain a single 5/2-way valve function or a 5/3-way valve function instead of two 3/2-way valve functions.

11. Multiway valve according to any of claims 1 to 10, characterized in that each valve slide (27, 27') is in the form of a piston slide.

12. Multiway valve according to any of claims 1 to 11, characterized in that the valve housing (2) is longitudinally divided in the area of the slide mount (12) and has several longitudinally-adjacent housing sections (48, 49) in the divided area (37).

13. Multiway valve according to claim 12, characterized in that one or more valve passages (17) run in the valve housing (12), wherein at least one length section of a valve passage (17) extends into the divided area (37), while the passage wall of this length section is comprised of wall periphery sections which complement one another and are provided on the longitudinally-adjoining housing sections (48, 49) in the divided area (37).

14. Multiway valve according to claim 13, characterized in that a length section of a valve passage (17) running in the divided area (37) belongs to a valve control passage (18, 18') which conveys the control fluid used to act upon an actuating surface (25).

## Revendications

1. Vanne à plusieurs voies, comportant un corps de vanne dans lequel est prévu un logement de tiroirs (12) s'étendant axialement, dans lequel se trouve un dispositif à tiroirs de vanne (11), qui est déplaçable longitudinalement dans le logement de tiroirs (12), sous l'action d'une pression de commande, afin d'influencer l'arrivée d'un fluide d'actionnement vers au moins deux canaux de travail de vanne (21, 21'), débouchant latéralement dans le logement de tiroirs (12), le dispositif à tiroirs de vanne (11) comportant deux tiroirs de vanne (27, 27') séparés, à chacun desquels sont associés l'un des deux canaux de travail de vanne (21, 21') ainsi que plusieurs bagues d'étanchéité (46) les entourant et servant à la commande de la liaison fluidique, et qui sont disposés coaxialement, l'un derrière l'autre, conjointement dans le logement de tiroirs (12), s'étendant en continu d'une extrémité à l'autre, lesdits tiroirs étant déplaçables longitudinalement sous l'action correspondante de la pression de commande sur une surface d'actionnement (25) qui leur est associée, caractérisée en ce que chaque tiroir de vanne (27, 27') présente, dans sa zone d'extrémité opposée à l'autre tiroir de vanne (27, 27'), une surface d'actionnement (25), tournée à l'opposé de cet autre tiroir de vanne (27', 27), susceptible de recevoir une pression de commande, laquelle surface est prévue sur un piston de commande (26), relié au tiroir de vanne (27, 27') concerné, monté axialement mobile dans une chambre de piston (32), et en ce que les deux tiroirs de vanne (27, 27') peuvent être commutés indépendamment l'un de l'autre entre deux positions de commutation, qui sont définies par des butées (33, 42), solidaires du corps, coopérant avec le piston de commande (26), prévues sur les parois axiales de délimitation d'une chambre de piston (32) respective, les deux tiroirs de vanne (27, 27') ayant une longueur telle qu'ils peuvent prendre simultanément la position de commutation dans laquelle ils sont rapprochés l'un de l'autre.

2. Vanne à plusieurs voies selon la revendication 1, caractérisée en ce que dans le logement de tiroirs (12), dans la zone des extrémités (36) tournées l'une vers l'autre des deux tiroirs de vanne (27, 27'), est prévu au moins un moyen d'actionnement (34), qui agit sur les deux tiroirs de vanne (27, 27') dans des sens axiaux opposés l'un à l'autre.

3. Vanne à plusieurs voies selon la revendication 2, caractérisée en ce que le ou les moyens d'actionnement (34) est ou sont conformés en dispositif à ressort (35).

4. Vanne à plusieurs voies selon la revendication 2 ou 3, caractérisée en ce que le ou les moyens d'action (34) se trouvent entre les deux tiroirs de vanne (27, 27') et agit ou agissent toujours simultanément sur les deux tiroirs de vanne (27, 27').

5. Vanne à plusieurs voies selon l'une des revendications 2 à 4, caractérisée en ce que les deux tiroirs de vanne (27, 27') présentent, sur leurs côtés frontaux (28) tournés l'un vers l'autre, un évidement (38) dans lequel le ou les moyens d'actionnement (34) est ou sont logés en étant au moins partiellement encastrés.

6. Vanne à plusieurs voies selon l'une des revendications 1 à 5, caractérisée en ce que chaque tiroir de vanne (27, 27') exerce, avec des canaux de vanne (17), qui lui sont associés, débouchant latéralement dans le logement de tiroirs (12), une fonction de vanne à trois voies, avantageusement une fonction de vanne à 3/2 voies.

7. Vanne à plusieurs voies selon l'une des revendications 1 à 6, caractérisée en ce qu'une commande simultanée des deux tiroirs de vanne (27, 27') est prévue de manière à permettre une autorisation ou une interruption simultanée, alternée, de l'arrivée du fluide d'actionnement aux deux canaux de travail de vanne (21, 21').

8. Vanne à plusieurs voies selon la revendication 7, caractérisée en ce que les deux canaux de travail de vanne (21, 21') sont réunis en un canal de travail (21") commun.

9. Vanne à plusieurs voies selon l'une des revendications 1 à 8, caractérisée en ce qu'une commande décalée dans le temps des deux tiroirs de vanne (27, 27') est prévue de manière à permettre une autorisation et une interruption alternées de l'arrivée de fluide d'actionnement aux deux canaux de travail de vanne (21, 21').

10. Vanne à plusieurs voies selon l'une des revendications 1 à 9, caractérisée en ce que les deux tiroirs de vanne (27, 27') séparés peuvent être remplacés par un seul tiroir de vanne (57) d'un seul tenant, afin d'obtenir une seule fonction de vanne à 5/2 voies ou une fonction de vanne à 5/3 voies, au lieu de deux fonctions de vanne à 3/2 voies.

11. Vanne à plusieurs voies selon l'une des revendications 1 à 10, caractérisée en ce que chaque tiroir de vanne (27, 27') est conformé en tiroir à piston.

12. Vanne à plusieurs voies selon l'une des revendications 1 à 11, caractérisée en ce que le corps de vanne (2) est divisé longitudinalement, dans la région du logement de tiroirs (12), et comporte plusieurs parties de corps (48, 49) juxtaposées longitudinalement, dans la zone de division (37).

13. Vanne à plusieurs voies selon la revendication 12, caractérisée en ce que dans le corps de vanne (12) s'étend au moins un canal de vanne (17), au moins un tronçon longitudinal d'un canal de vanne (17) s'étendant dans la zone de division (37), la paroi de canal de ce tronçon longitudinal étant composée de tronçons périphériques de paroi, se complétant, qui sont prévus sur les parties de corps (48, 49) adjacentes les unes aux autres longitudinalement, dans la zone de division (37).

14. Vanne à plusieurs voies selon la revendication 13, caractérisée en ce qu'un tronçon longitudinal, s'étendant dans la zone de division (37), d'un canal de vanne (17), fait partie d'un canal de commande de vanne (18, 18'), qui véhicule le fluide de commande, servant à agir sur une surface d'actionnement (25).
